# EUROPÄISCHE PATENTSCHRIFT

(11) **EP 3 515 769 B1**
(45) Veröffentlichungstag und Bekanntmachung des Hinweises auf die Patenterteilung: **25.11.2020**
(21) Anmeldenummer: 17768091.5
(22) Anmeldetag: 13.09.2017
(51) Int. Cl.: B60T 13/66, B60T 17/22, F16D 55/224, F16D 65/18

(54) **VERFAHREN UND VORRICHTUNG ZUR BEEINFLUSSUNG EINES KINEMATISCHEN VERHALTENS EINES FAHRZEUGS**
METHOD AND APPARATUS TO CONTROL THE KINEMATIC BEHAVIOUR OF AVEHICLE
PROCEDE ET APPAREIL POUR CONTROLER LE COMPORTEMENT CINEMATIQUE 'UN VEHICULE

(30) Priorität: 21.09.2016 AT 508442016
(43) Veröffentlichungstag der Anmeldung: 31.07.2019
(73) Patentinhaber: Siemens Mobility Austria GmbH, 1210 Wien (AT)
(72) Erfinder: GUTSCHI, Daniela, 8020 Graz (AT); KNOLL, Markus, 90429 Nürnberg (DE); SCHINAGL, Gerhild, 8046 Stattegg (AT)
(74) Vertreter: Deffner, Rolf
(86) Internationale Anmeldenummer: PCT/EP2017/072996
(87) Internationale Veröffentlichungsnummer: WO 2018/054736

(56) Entgegenhaltungen:
- EP-A2- 1 270 358
- EP-A2- 1 950 111
- WO-A1-92/00212
- DE-A1- 19 943 352
- DE-C2- 4 235 364

## Beschreibung

Die Erfindung betrifft ein Verfahren zur Beeinflussung eines kinematischen Verhaltens eines Fahrzeugs, insbesondere eines Schienenfahrzeugs mit zumindest einem Reibungsbremssystem, bei dem eine Bremswirkung durch ein Gegeneinanderdrücken zumindest eines ersten Reibelements und eines zweiten Reibelements erzeugt wird.

Fahrzeuge sind häufig mit Reibungsbremssystemen ausgerüstet, bei denen durch das Gegeneinanderdrücken von Reibelementen eine Bremswirkung auf das Fahrzeug ausgelöst wird, d.h. eine kinetische Energie des Fahrzeugs in Wärme umgewandelt wird. Bekannte Ausführungsformen von Reibungsbremssystemen sind z.B. pneumatische Scheibenbremsen. Pneumatische Scheibenbremsen umfassen beispielsweise eine auf einem Radsatz gelagerte Bremsscheibe sowie eine Bremszange mit einem Bremszylinder, einem Gestänge und Bremsbelägen. Der Bremszylinder weist einen Kolben auf, mit dem das Bremsgestänge betätigt und die Bremsbeläge an die Bremsscheibe gepresst werden. Der Bremszylinder umfasst Druckluftanschlüsse, über welche der Kolben zur Betätigung des Gestänges mit Druckluft aus einem Druckluftsystem des Fahrzeugs beaufschlagt wird. Das Druckluftsystem weist Komponenten zur Steuerung und Regelung der Scheibenbremse, wie z.B. Kompressoren, Bremssteuergeräte etc. auf.
Die Umwandlung von kinetischer Energie des Fahrzeugs in Wärme bewirkt eine Temperaturerhöhung der Reibelemente, d.h. für die Scheibenbremse z.B. eine Temperaturerhöhung der Bremsscheibe und der Bremsbeläge.
Die eingesetzten Materialien dürfen bei den auftretenden Höchsttemperaturen ihre geforderten Eigenschaften in Bezug auf Festigkeit, chemische Beständigkeit etc. nicht verlieren. Insbesondere Bremsbeläge aus organischem Material weisen eine geringe Temperaturbeständigkeit auf, Temperaturen ab ca. 300°C können zu Rauchentwicklung führen.

Aus diesen Gründen ist das Risiko einer Überschreitung spezifizierter Maximaltemperaturen von Bremskomponenten zu vermeiden.

Aus dem Stand der Technik sind verschiedene thermische Berechnungsmethoden bekannt. So beschreiben Saumweber et. al. in Grundlagen der Schienenfahrzeugbremse des Archivs für Eisenbahntechnik des Hestra-Verlags, 1990 auf S. 22ff eine analytische Methode zur Temperaturberechnung unter Einsatz einer eindimensionalen Wärmeleitungsgleichung.

Aus dem Stand der Technik ist beispielsweise die EP 1 950 111 B1 bekannt, in welcher ein Verfahren zur Bewertung der Temperatur einer Bremsscheibe offenbart wird, bei dem die Temperatur als Funktion einer Wärmeenergie, einer Masse und einer Wärmekapazität der Bremsscheibe ermittelt wird.

In der DE 199 43 352 A1 wird eine Vorrichtung und ein Verfahren zum Bestimmen der Temperatur von an einem Fahrzeug vorgesehenen Bremselementen gezeigt. Das Verfahren berechnet aus der kinetischen Energie des Fahrzeugs Temperaturen eines Bremssystems und definiert auf dieser Basis zulässige Fahrgeschwindigkeiten.

Die DE 42 35 364 C2 beschreibt ein Verfahren zum Erfassen der Temperatur einer Scheibenbremse, wobei aus einem die Fahrgeschwindigkeit mit der Anpresskraft von Bremsbelägen an eine Bremsscheibe verknüpfenden Lastsignal eine Temperaturerhöhung sowie aus einer abgeführten Wärmemenge eine Temperatursenkung der Bremse berechnet wird.
Der genannte Ansatz weist in seiner bekannten Form den Nachteil auf, dass das dem Verfahren zugrundeliegende Modell keine Wärmeleitung durch die Bremsscheibe berücksichtigt und die Abkühlung nicht geschwindigkeitsabhängig berechnet wird, wodurch Rechenergebnisse für die Temperaturerhöhung und Temperatursenkung Ungenauigkeiten aufweisen können.

Weiterhin ist das Verfahren so lange aktiv und berechnet Temperaturen, bis die Bremsscheibe Umgebungstemperatur aufweist. D.h. eine die Berechnungen durchführende Recheneinheit muss gegebenenfalls auch nach dem Abstellen eines Fahrzeugs über eine bestimmte Zeitdauer eingeschaltet bleiben bzw. mit Strom versorgt werden.

Ferner wird eine Warnung ausgegeben, sobald die Berechnung ergibt, dass eine kritische Temperatur der Bremse unmittelbar vorliegt. Es erfolgt keine Prognose über gegebenenfalls zukünftig auftretende kritische Temperaturen.

Der Erfindung liegt daher die Aufgabe zugrunde, ein gegenüber dem Stand der Technik verbessertes Verfahren anzugeben. Erfindungsgemäß wird diese Aufgabe gelöst mit einem Verfahren der eingangs genannten Art,

bei dem zumindest aus Informationen über eine Geschwindigkeit, einen Bremsdruck und eine Außentemperatur des Fahrzeugs sowie über Absolut-Zeiten zumindest Temperaturen zumindest des ersten Reibelements berechnet werden, wobei bei dieser Berechnung eine Wärmeleitung durch das zumindest erste Reibelement sowie eine geschwindigkeitsabhängige Abkühlung des zumindest ersten Reibelements berücksichtigt werden, bei dem eine Beeinflussung des kinematischen Verhaltens des Fahrzeugs auf Basis dieser Berechnung erfolgt, und das kinematische Verhalten des Fahrzeugs hinsichtlich eines berechneten, zulässigen Fahrprofils des Fahrzeugs beeinflusst wird.

Dadurch ergibt sich erstens der Vorteil, dass auf eine konstruktiv aufwendige, wartungsanfällige und teure Ausstattung des Reibungsbremssystems mit Sensoren zur Messung von Reibelement-Temperaturen verzichtet werden kann, da die Ermittlung von Temperaturen und weiteren Parametern (z.B. aufgrund des thermischen Zustands zulässige Fahrgeschwindigkeiten, Parameter der Abkühlung etc.) des Reibungsbremssystems rechnerisch auf einer entsprechenden Recheneinheit erfolgt.

Eine gute Genauigkeit bezüglich des berechneten thermischen Verhaltens des Reibungsbremssystems ergibt sich weiterhin aufgrund der Berücksichtigung der Wärmeleitung durch das erste Reibelement sowie der geschwindigkeitsabhängigen Abkühlung des ersten Reibelements.

Darüber hinaus wird über die Erfassung eines Absolut-Zeitsignals der Vorteil erzielt, dass nach einem Zeitraum, in dem das Fahrzeug abgestellt war, unter Einsatz einer Abkühlfunktion Temperaturen ermittelt werden, die das Reibungsbremssystem während dieses Abstellzeitraums aufgewiesen hat und die als Startwerte für Temperaturberechnungen nach einer Wiederinbetriebnahme des Fahrzeugs eingesetzt werden. Aus diesem Grund kann die Recheneinheit zum Zeitpunkt des Abstellens des Fahrzeugs ausgeschaltet werden.

Auf Grundlage der Ergebnisse der Temperaturberechnung wird das kinematische Verhalten des Fahrzeugs beeinflusst. Dabei kann nicht nur eine zulässige Maximalgeschwindigkeit definiert werden, sondern erfindungsgemäß wird auch ein Fahrprofil definiert, wodurch sich eine günstige Flexibilität in Bezug auf einsatzspezifische Anforderungen ergibt. Insbesondere ist dadurch eine Optimierung des Fahrverhaltens hinsichtlich einer Fahrtdauer, der Fahrgeschwindigkeit etc. unter Berücksichtigung der thermischen Leistungsfähigkeit des Reibungsbremssystems möglich.

Aufgrund des Verfahrens wird ein Betrieb des Fahrzeugs in bezüglich der thermischen Belastung des Reibungsbremssystems unzulässigen Temperaturbereichen vermieden. Das Reibungsbremssystem kann entsprechend in einer Weise ausgelegt werden, dass eine Überdimensionierung von Komponenten verhindert bzw. erforderliche Sicherheiten reduziert werden.

Eine vorteilhafte Ausgestaltung erhält man, wenn die Berechnung unter Berücksichtigung einer Wärmeleitung durch das zweite Reibelement sowie einer geschwindigkeitsabhängigen Abkühlung des zweiten Reibelements durchgeführt wird.

Durch diese Maßnahme wird eine weitere Erhöhung der Genauigkeit bei der rechnerischen Erfassung von thermischen Zuständen des Reibungsbremssystems erzielt.

Es ist günstig, wenn Temperaturen zumindest des ersten Reibelements für zukünftig durchzuführende Bremsungen des Fahrzeugs prognostiziert werden.

Durch diese Maßnahme können thermische Überlastungen des Reibungsbremssystems lange vor deren Eintreten durch Beeinflussung des kinematischen Verhaltens des Fahrzeugs vermieden werden.

Eine erfindungsgemäße Lösung wird erzielt, wenn das kinematische Verhalten des Fahrzeugs automatisch beeinflusst wird.

Durch diese Maßnahme wird eine Reduktion der Arbeitsbelastung eines Fahrzeugführers erreicht. Weiterhin wird das Risiko einer unzureichenden Reaktion des Fahrzeugs auf die Vorgabe eines erforderlichen kinematischen Verhaltens gesenkt.

Es ist günstig, wenn Berechnungsergebnisse gegenüber Bedienern des Fahrzeugs zumindest in einer Weise dargestellt werden, dass vor einer Bremsung, für die das Erreichen einer hinsichtlich der thermomechanischen Beanspruchung zumindest des ersten Reibelements kritischen Temperatur prognostiziert wird, eine Warnung ausgegeben wird.

Durch diese Maßnahme ergibt sich eine günstige Planbarkeit des Fahrverhaltens. Beispielsweise kann durch einen Fahrzeugführer bereits vor einer Beschleunigungsphase des Fahrzeugs eine maximal zulässige Fahrgeschwindigkeit festgelegt werden, aus der eine Bremsung ohne Überschreitung der kritischen Temperatur des Reibungsbremssystems möglich ist.

Nachfolgend wird die Erfindung anhand von Ausführungsbeispielen näher erläutert.

Es zeigen beispielhaft:
- Fig. 1:: Eine schematische Darstellung einer beispielhaften Ausführung einer pneumatischen Reibungsbremse mit einer Bremsscheibe und einer Bremszange,
- Fig. 2:: Ein Funktionsschaubild einer beispielhaften Ausführung einer erfindungsgemäßen Vorrichtung für ein erfindungsgemäßes Verfahren mit Mitteln zur Datenaufzeichnung sowie einer Recheneinheit und einer Regeleinheit, und
- Fig. 3:: Ein Flussdiagramm einer beispielhaften Variante eines erfindungsgemäßen Verfahrens zur zyklischen Berechnung von Temperaturen und zulässigen Fahrgeschwindigkeiten sowie zur Beschränkung der Fahrgeschwindigkeit.

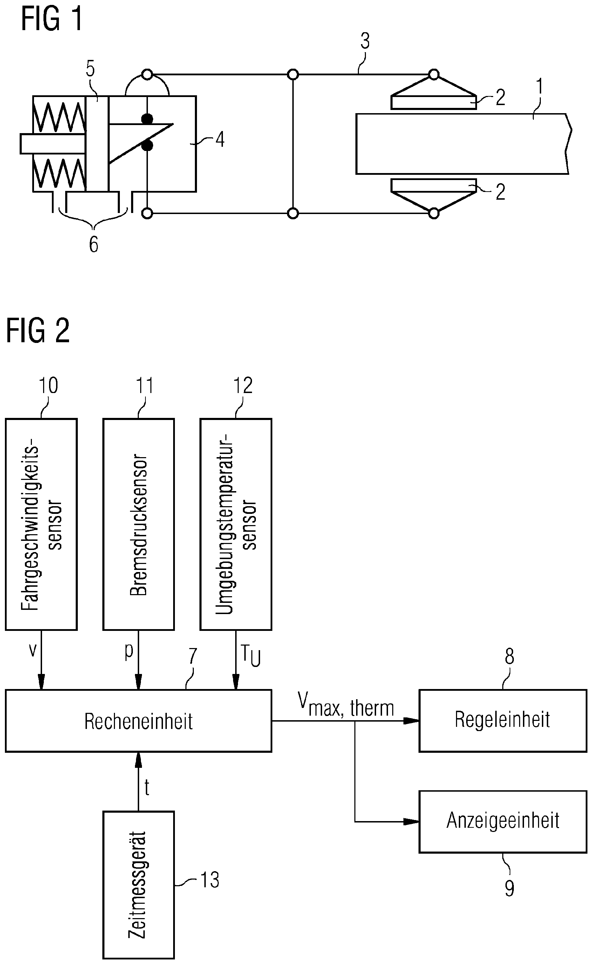

Ein in Fig. 1 schematisch dargestellter Ausschnitt aus einem Reibungsbremssystem eines Schienenfahrzeugs zeigt eine pneumatische Scheibenbremse.
Diese umfasst ein erstes Reibelement 1, das als Bremsscheibe ausgeführt ist, die auf einer nicht dargestellten Radsatzwelle des Schienenfahrzeugs gelagert ist sowie eine Bremszange. Die Bremszange weist ein zweites Reibelement 2 auf, das zwei Bremsbeläge umfasst. Weiterhin weist die Bremszange einen Bremszylinder 4 mit Druckluftanschlüssen 6 und einem Kolben 5 sowie ein Gestänge 3 auf.
Der Kolben 5 betätigt das Gestänge 3, wodurch die auf dem Gestänge 3 angeordneten Bremsbeläge, d.h. das zweite Reibelement 2 an die Bremsscheibe, d.h. das erste Reibelement 1 gepresst werden. Über die Druckluftanschlüsse 6 wird der Kolben 5 zur Betätigung des Gestänges 3 mit Druckluft aus einem nicht dargestellten Druckluftsystem des Schienenfahrzeugs beaufschlagt.
Das Druckluftsystem weist Komponenten zur Steuerung und Regelung des Reibungsbremssystems, wie z.B. Kompressoren, Bremssteuergeräte etc. auf. Das Bremssteuergerät weist eine in Fig. 2 dargestellte Recheneinheit 7 auf, in welcher thermische Berechnungen entsprechend des erfindungsgemäßen Verfahrens durchgeführt werden. Das Bremssteuergerät ist mit einer nicht dargestellten Fahrzeugsteuerung verbunden. Die Fahrzeugsteuerung umfasst eine in Fig. 2 dargestellte Regeleinheit 8, mit welcher das kinematische Verhalten des Schienenfahrzeugs aufgrund von Ergebnissen der thermischen Berechnungen beeinflusst wird.

Ein Gegeneinanderdrücken des ersten Reibelements 1 und des zweiten Reibelements 2 verursacht eine Bremswirkung auf das Schienenfahrzeug. Dabei erfolgt eine Umwandlung von kinetischer Energie des Schienenfahrzeugs in Wärme, wodurch eine Temperaturerhöhung des ersten Reibelements 1 und des zweiten Reibelements 2 verursacht wird.
Ein Lösen des ersten Reibelements 1 und des zweiten Reibelements 2 voneinander bewirkt eine Reduktion bzw. eine Aufhebung der Bremswirkung auf das Schienenfahrzeug. Dadurch sowie durch eine Wirkung bekannter Wärmeübergangsprinzipien werden die Temperaturen in dem ersten Reibelement 1 sowie in dem zweiten Reibelement 2 reduziert, d.h. das erste Reibelement 1 und das zweite Reibelement 2 kühlen ab.
Das beschriebene Temperaturverhalten wird mittels des erfindungsgemäßen Verfahrens berechnet.

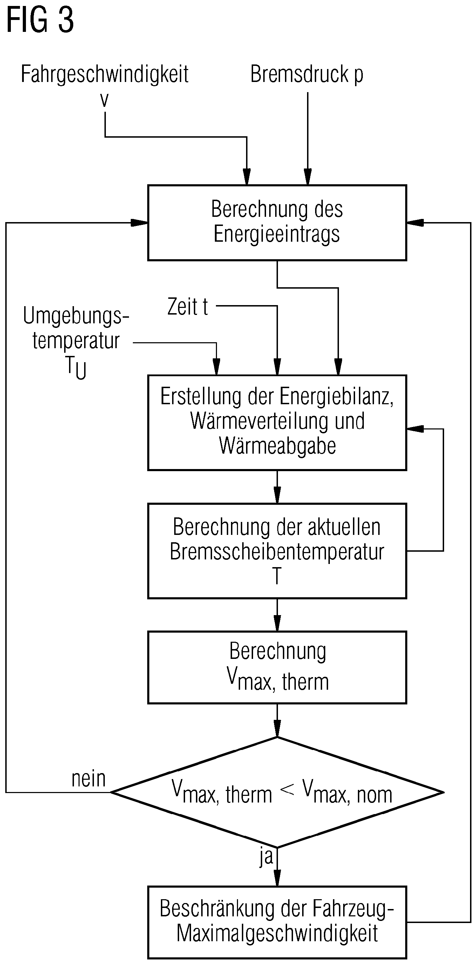

Fig. 2 zeigt ein Funktionsschaubild einer beispielhaften Variante einer erfindungsgemäßen Vorrichtung, die für das erfindungsgemäße Verfahren zur Beeinflussung des kinematischen Verhaltens eines Schienenfahrzeugs eingerichtet ist.
Die Vorrichtung umfasst einen Fahrgeschwindigkeitssensor 10 zur Erfassung einer Fahrgeschwindigkeit v, einen Bremsdrucksensor 11 zur Erfassung eines Bremsdrucks p, einen Umgebungstemperatursensor 12 zur Erfassung einer Umgebungstemperatur T_{U}, ein Zeitmessgerät 13 zur Erfassung einer Absolut-Zeit t sowie eine Anzeigeeinheit 9, die über entsprechende Datenleitungen mit einer Recheneinheit 7 verbunden sind. Der Fahrgeschwindigkeitssensor 10, der Bremsdrucksensor 11 und der Umgebungstemperatursensor 12 sind in einem nicht dargestellten Fahrwerk des Schienenfahrzeugs angeordnet. Dabei handelt es sich um eine günstige Lösung. Erfindungsgemäß ist es jedoch auch denkbar, dass die Fahrgeschwindigkeit v sowie der Bremsdruck p aus einem Datenbussystem (z.B. Multi Vehicle Bus, MVB) des Schienenfahrzeugs in die Recheneinheit 7 eingelesen werden. Weiterhin ist es auch vorstellbar, dass der Bremsdruck p aus einer Verzögerung und einer abzubremsenden Masse näherungsweise bestimmt wird. Die Verzögerung wird dabei beispielsweise durch Differentiation der Fahrgeschwindigkeit v berechnet und die abzubremsende Masse über eine Lastbremsvorrichtung bestimmt.
Darüber hinaus ist es auch denkbar, dass statt einer Fahrgeschwindigkeit v eine Winkelgeschwindigkeit eines Rads bzw. eine Raddrehzahl erfasst und die thermischen Berechnungen mit dieser Winkelgeschwindigkeit bzw. dieser Raddrehzahl durchgeführt werden.
Das Zeitmessgerät 13 sowie die Recheneinheit 7 sind, implementiert in ein nicht dargestelltes Bremssteuergerät, in einem nicht dargestellten Wagenkasten angeordnet.
Die Recheneinheit 7 empfängt über entsprechende Datenleitungen von dem Fahrgeschwindigkeitssensor 10 Daten bezüglich der Fahrgeschwindigkeit v, von dem Bremsdrucksensor 11 Daten bezüglich des Bremsdrucks p, von dem Umgebungstemperatursensor 12 Daten bezüglich der Umgebungstemperatur T_{U} sowie von dem Zeitmessgerät 13 Daten bezüglich der Absolut-Zeit t und führt Rechenoperationen entsprechend dem erfindungsgemäßen Verfahren aus. Unter Einsatz der Fahrgeschwindigkeit v, des Bremsdrucks p, der Umgebungstemperatur T_{U} und der Absolut-Zeit t werden gemäß der Beschreibung zu Fig. 3 thermische Zustände des in Fig. 1 dargestellten Reibungsbremssystems sowie eine aufgrund dieser thermischen Zustände zulässige Fahrgeschwindigkeit V_{max,therm} ermittelt.
Die Recheneinheit 7 ist über entsprechende Datenleitungen mit einer in einer nicht dargestellten Fahrzeugsteuerung implementierten, in dem Wagenkasten angeordneten Regeleinheit 8 verbunden. Die Regeleinheit 8 beeinflusst das kinematische Verhalten des Schienenfahrzeugs in einer Weise, dass z.B. das Schienenfahrzeug auf eine aufgrund einer thermischen Berechnung von der Recheneinheit 7 ermittelte und an die Regeleinheit 8 übertragene, zulässige Fahrgeschwindigkeit v_{max, therm} automatisch abgebremst wird oder eine Beschleunigung über diese zulässige Fahrgeschwindigkeit v_{max, therm} hinaus verhindert wird.
Die Anzeigeeinheit 9 ist in einem nicht gezeigten Führerstand des Schienenfahrzeugs angeordnet. Auf ihr werden einem Triebfahrzeugführer aufgrund thermischer Berechnungen entsprechend dem erfindungsgemäßen Verfahren zulässige Fahrgeschwindigkeiten v_{max, therm} angezeigt. Für die Darstellung erforderliche Daten werden von der Recheneinheit 7 an die Anzeigeeinheit 9 über entsprechende Datenleitungen übermittelt.
Erfindungsgemäß ist es auch möglich, dass zulässige Verzögerungen oder zulässige Fahrprofile (zeitliche Abfolgen von Beschleunigungs- und Verzögerungsabschnitten sowie Phasen mit konstanter Fahrgeschwindigkeit v oder Phasen des Stillstands) angezeigt werden.
Zur Warnung vor einem ungünstigen kinematischen Verhalten des Schienenfahrzeugs im Hinblick auf thermische Zustände des Reibungsbremssystems werden über eine Audio-Ausgabeeinrichtung der Anzeigeeinheit 9 zusätzlich akustische Signale an den Triebfahrzeugführer ausgegeben.

Erfindungsgemäß sind verschiedene Ausführungen und Anordnungen des Fahrgeschwindigkeitssensors 10, des Bremsdrucksensors 11, des Umgebungstemperatursensors 12, des Zeitmessgeräts 13, der Anzeigeeinheit 9, der Recheneinheit 7 und der Regeleinheit 8 vorstellbar. Es ist beispielsweise denkbar, die Recheneinheit 7 getrennt von dem Bremssteuergerät und die Regeleinheit 8 getrennt von der Fahrzeugsteuerung anzuordnen.
Weiterhin ist es auch vorstellbar, dass beispielsweise die Recheneinheit 7 in einem Leitstand angeordnet ist und über Funksignale mit dem Schienenfahrzeug kommuniziert, d.h. z.B. Informationen über dessen Fahrgeschwindigkeit v empfängt und auf Grundlage einer durchgeführten, erfindungsgemäßen thermischen Berechnung Instruktionen zur Beschränkung der Fahrgeschwindigkeit v auf eine zulässige Fahrgeschwindigkeit v_{max, therm} Sendet.

Ein in Fig. 3 dargestelltes Flussdiagramm beschreibt Schritte einer beispielhaften Variante eines erfindungsgemäßen Verfahrens zur thermischen Berechnung und Beeinflussung des kinematischen Verhaltens eines Schienenfahrzeugs, die in einer in Fig. 2 gezeigten Recheneinheit 7 und einer Regeleinheit 8 des Schienenfahrzeugs durchgeführt werden.

Für die Durchführung des Verfahrens werden entsprechend der Beschreibung zu Fig. 2 Daten bezüglich einer Fahrgeschwindigkeit v, eines Bremsdrucks p, einer Umgebungstemperatur T_{U} sowie einer Absolut-Zeit t an die Recheneinheit 7 mit einer Frequenz von 4 Hz übertragen, wobei erfindungsgemäß auch andere Frequenzen vorstellbar sind.
Die übertragenen Daten werden bezüglich ihrer Plausibilität geprüft. Sind ein oder mehrere Werte ungültig, so wird das kinematische Verhalten des Schienenfahrzeugs zunächst nicht mehr beeinflusst. Werden diese Werte wieder als gültig deklariert und wird länger als eine bestimmte Zeitdauer während einer Fahrt des Schienenfahrzeugs keine Bremsung mit einem in Fig. 1 dargestellten ersten Reibelement 1 durchgeführt, werden auf Grundlage eines Neustarts der thermischen Berechnung mit einer Starttemperatur (beispielsweise die zum Zeitpunkt des Neustarts aktuelle Umgebungstemperatur T_{U}) wieder Temperaturen T_{S} des ersten Reibelements 1 berechnet und das kinematische Verhalten des Schienenfahrzeugs wird gegebenenfalls wieder beeinflusst. Mit der Fahrgeschwindigkeit v und dem Bremsdruck p wird ein Energieeintrag in ein in Fig. 1 dargestelltes erstes Reibelement 1 (eine Bremsscheibe) berechnet, d.h. die aufgrund einer Bremsung in das erste Reibelement 1 eingeleitete Energie.
Mit dieser Energie sowie der Umgebungstemperatur T_{U} und der Absolut-Zeit t wird eine Energiebilanz gebildet, eine Wärmeverteilung zwischen dem ersten Reibelement 1 und dem zweiten Reibelement 2 sowie innerhalb des ersten Reibelements 1 berechnet und eine Wärmeabgabe an eine Umgebung des Schienenfahrzeugs ermittelt.
Es werden dabei die Wärmeleitung durch das erste Reibelement 1 sowie dessen geschwindigkeitsabhängige Abkühlung berücksichtigt. Erfindungsgemäß ist es zur weiteren Verbesserung der Genauigkeit der thermischen Berechnung auch möglich, die Wärmeleitung durch ein in Fig. 1 dargestelltes zweites Reibelement 2 (Bremsbeläge) sowie dessen geschwindigkeitsabhängige Abkühlung zu berücksichtigen.

Bei der Ermittlung der Energiebilanz, der Wärmeverteilungen sowie der Wärmeabgabe werden aus dem Stand der Technik bekannte Methoden eingesetzt.
Eine Temperatur T_{S} des ersten Reibelements 1 (die Bremsscheibentemperatur) wird zyklisch mit einer Frequenz von 4 Hz, wobei erfindungsgemäß auch andere Frequenzen vorstellbar sind, aus der Wärmeverteilung und der Wärmeabgabe unter Berücksichtigung gespeicherter Temperaturen T_{S, n-1} des ersten Reibelements 1 aus früheren Zeitschritten der Berechnung sowie der Umgebungstemperatur T_{U} bestimmt. Erfindungsgemäß ist es auch möglich, Temperaturen T_{B} des zweiten Reibelements 2 zu berechnen.

Aus der berechneten Temperatur T_{S} des ersten Reibelements 1 und einer Temperaturprognose für zukünftige Bremsungen des Schienenfahrzeugs mit vordefinierten Parametern (z.B. mit einer vordefinierten Verzögerung) wird jene zulässige Fahrgeschwindigkeit v_{max, therm} berechnet, aus der eine derart vordefinierte Bremsung noch möglich ist, ohne eine für das erste Reibelement 1 spezifizierte, kritische Temperatur T_{S, krit} zu überschreiten. Für v_{max, therm} ist ein unterer Grenzwert definiert, um betrieblich unrealistische Fahrgeschwindigkeitsvorgaben bzw.
Fahrgeschwindigkeitsvorgaben von kleiner oder gleich 0 m/s für das Schienenfahrzeug zu vermeiden. Dieser untere Grenzwert wird in einer Weise festgelegt, dass die kritische Temperatur T_{S, krit} des ersten Reibelements 1 bei Durchführung von vordefinierten Bremsungen, anschließender Beschleunigung auf diesen unteren Grenzwert und erneuter Bremsung nicht überschritten wird, d.h. es stellt sich bei Einhaltung dieses Fahrspiels eine Temperatur T_{S} des ersten Reibelements 1 ein, die sich im Mittel nicht mehr ändert.

Ist die zulässige Fahrgeschwindigkeit v_{max, therm} kleiner als eine nominale Höchstgeschwindigkeit v_{max, nom} des Schienenfahrzeugs, so wird die zulässige Fahrgeschwindigkeit v_{max, therm} von der Recheneinheit 7 an die Regeleinheit 8 übermittelt, um die Fahrgeschwindigkeit v des Schienenfahrzeugs auf die zulässige Fahrgeschwindigkeit v_{max, therm} zu beschränken.
Die Einhaltung dieser zulässigen Fahrgeschwindigkeit v_{max, therm} wird von der Regeleinheit 8 überwacht, eine Geschwindigkeitsüberschreitung verhindert bzw. bei Überschreitung der zulässigen Fahrgeschwindigkeit v_{max, therm} wird das Schienenfahrzeug automatisch auf diese abgebremst. Auf einer Anzeigeeinheit 9 in einem Führerstand wird, entsprechend der Beschreibung zu Fig. 2, die zulässige Geschwindigkeit v_{max, therm} angezeigt und vor deren Überschreitung ein optisches und akustisches Warnsignal ausgegeben.
Erfindungsgemäß ist es auch vorstellbar, dass die Fahrgeschwindigkeit v nicht automatisch beeinflusst wird, sondern die Anzeigeeinheit 9 lediglich eine Instruktion zur Einhaltung der zulässigen Fahrgeschwindigkeit v_{max, therm} ausgibt, die durch manuelle Eingriffe eines Triebfahrzeugführers umzusetzen ist.
Die Berechnung der zulässigen Fahrgeschwindigkeit v_{max, term} sowie die gegebenenfalls erforderliche Beschränkung der Fahrgeschwindigkeit v erfolgt zyklisch mit einer Frequenz von 4 Hz, wobei erfindungsgemäß auch andere Frequenzen vorstellbar sind.
Erfindungsgemäß ist es auch möglich, dass eine zulässige Verzögerung berechnet und deren Einhaltung von der Regeleinheit 8 überwacht wird. Es sind auch Kombinationen denkbar, d.h. z.B. die Berechnung und Überwachung einer zulässige Verzögerung sowie einer darauf abgestimmten zulässigen Fahrgeschwindigkeit v_{max, therm}.
Weiterhin ist auch die Berechnung und Überwachung eines zulässigen Fahrprofils (zeitliche Abfolgen von Beschleunigungs- und Verzögerungsabschnitten sowie Phasen mit konstanter Fahrgeschwindigkeit v oder Phasen des Stillstands) denkbar.

War das Schienenfahrzeug über einen Zeitraum abgestellt, so wird nach dessen Wiederinbetriebnahme unter Einsatz des oben beschriebenen Verfahrens und der genannten Parameter, insbesondere der Absolut-Zeit t und einer zum Zeitpunkt des Abstellens gespeicherten Temperatur T_{S, n-1} des ersten Reibelements 1, einer gespeicherten Absolut-Zeit tₙ₋₁ etc. eine Temperatur T_{S} ermittelt, die das erste Reibelement 1 am Ende dieses Abstellzeitraums bzw. zum Zeitpunkt der Wiederinbetriebnahme aufgewiesen hat. Hierbei wird die Abkühlung des ersten Reibelements 1 mittels einer nach aus dem Stand der Technik bekannten Methoden vordefinierten Abkühlfunktion bei Stillstand des Schienenfahrzeugs, einer gespeicherten Umgebungstemperatur T_{U, n-1} zum Zeitpunkt des Abstellens und der Umgebungstemperatur T_{U} zum Zeitpunkt der Wiederinbetriebnahme des Schienenfahrzeugs berechnet. Die berechnete Temperatur T_{S} des ersten Reibelements 1 wird als ein Startwert für thermische Berechnungen nach der Wiederinbetriebnahme des Schienenfahrzeugs eingesetzt.
Die Recheneinheit 7 kann daher mit dem Schienenfahrzeug ausgeschaltet werden und muss nicht separat mit Strom versorgt werden. Da die Recheneinheit 7 eine Stromversorgungseinheit aufweist, ist es jedoch vorstellbar, auch während eines Abstellzeitraums des Schienenfahrzeugs Temperaturberechnungen durchzuführen.
Erfindungsgemäß ist es vorstellbar, mittels einer Abkühlfunktion auch die Abkühlung des zweiten Reibelements 2 zu berücksichtigen und Temperaturberechnungen bezüglich des zweiten Reibelements 2 durchzuführen.

Wenn über einen definierten Zeitraum keine Verzögerungsbremsung des Schienenfahrzeugs stattfindet oder die Abstellzeit (Ausschaltzeit der Recheneinheit 7) länger als über einen definierten Zeitraum andauert, so wird die Temperaturberechnung neu initialisiert. Als Starttemperatur wird die zum Zeitpunkt der neuerlichen Initialisierung aktuelle Umgebungstemperatur T_{U} eingesetzt.

### Liste der Bezeichnungen

- 1: Erstes Reibelement
- 2: Zweites Reibelement
- 3: Gestänge
- 4: Bremszylinder
- 5: Kolben
- 6: Druckluftanschlüsse
- 7: Recheneinheit
- 8: Regeleinheit
- 9: Anzeigeeinheit
- 10: Fahrgeschwindigkeitssensor
- 11: Bremsdrucksensor
- 12: Umgebungstemperatursensor
- 13: Zeitmessgerät

- p: Bremsdruck
- t: Absolut-Zeit
- tₙ₋₁: Gespeicherte Absolut-Zeit
- T_{S}: Temperatur des ersten Reibelements
- T_{S, n-1}: Gespeicherte Temperatur des ersten Reibelements
- T_{S, krit}: Kritische Temperatur des ersten Reibelements
- T_{B}: Temperatur des zweiten Reibelements
- T_{U}: Umgebungstemperatur
- T_{U, n-1}: Gespeicherte Umgebungstemperatur
- v: Fahrgeschwindigkeit
- v_{max, nom}: Nominale Höchstgeschwindigkeit
- v_{max, therm}: Zulässige Fahrgeschwindigkeit

## Patentansprüche

1. Verfahren zur Beeinflussung eines kinematischen Verhaltens eines Fahrzeugs, insbesondere eines Schienenfahrzeugs mit zumindest einem Reibungsbremssystem, bei dem eine Bremswirkung durch ein Gegeneinanderdrücken zumindest eines ersten Reibelements und eines zweiten Reibelements erzeugt wird, **dadurch gekennzeichnet,**
**dass** zumindest aus Informationen über eine Geschwindigkeit, einen Bremsdruck (p) und eine Außentemperatur (Tu) des Fahrzeugs sowie über Absolut-Zeiten (t) zumindest Temperaturen (Tₛ) zumindest des ersten Reibelements (1) berechnet werden,
**dass** bei dieser Berechnung eine Wärmeleitung durch das zumindest erste Reibelement (1) sowie eine geschwindigkeitsabhängige Abkühlung des zumindest ersten Reibelements (1) berücksichtigt werden,
**dass** eine Beeinflussung des kinematischen Verhaltens des Fahrzeugs auf Basis dieser Berechnung erfolgt, und
**dass** das kinematische Verhalten des Fahrzeugs hinsichtlich eines berechneten, zulässigen Fahrprofils des Fahrzeugs beeinflusst wird.

2. Verfahren nach Anspruch 1, **dadurch gekennzeichnet, dass** die Berechnung unter Berücksichtigung einer Wärmeleitung durch das zweite Reibelement (2) sowie einer geschwindigkeitsabhängigen Abkühlung des zweiten Reibelements (2) durchgeführt wird.

3. Verfahren nach Anspruch 1 oder 2, **dadurch gekennzeichnet, dass** Temperaturen (Tₛ) zumindest des ersten Reibelements (1) für zukünftig durchzuführende Bremsungen des Fahrzeugs prognostiziert werden.

4. Verfahren nach einem der Ansprüche 1, 2 oder 3, **dadurch gekennzeichnet, dass** nach einer Abstellzeit des Fahrzeugs zumindest Temperaturen (Ts), die zumindest das erste Reibelement (1) während dieser Abstellzeit aufgewiesen hat, berechnet werden.

5. Verfahren nach einem der Ansprüche 1, 2, 3 oder 4, **dadurch gekennzeichnet, dass** das kinematische Verhalten des Fahrzeugs hinsichtlich einer berechneten, zulässigen Fahrgeschwindigkeit (v_{max, therm}) des Fahrzeugs beeinflusst wird.

6. Verfahren nach einem der Ansprüche 1, 2, 3, 4 oder 5, **dadurch gekennzeichnet, dass** das kinematische Verhalten des Fahrzeugs hinsichtlich einer berechneten, zulässigen Verzögerung des Fahrzeugs beeinflusst wird.

7. Verfahren nach einem der Ansprüche 1, 2, 3, 4, 5 oder 6, **dadurch gekennzeichnet, dass** das kinematische Verhalten des Fahrzeugs automatisch beeinflusst wird.

8. Verfahren nach einem der Ansprüche 1, 2, 3, 4, 5, 6 oder 7 **dadurch gekennzeichnet, dass** Berechnungsergebnisse gegenüber Bedienern des Fahrzeugs zumindest in einer Weise dargestellt werden, dass vor einer Bremsung, für die das Erreichen einer hinsichtlich der thermomechanischen Beanspruchung zumindest des ersten Reibelements (1) kritischen Temperatur (T_{s, krit}) prognostiziert wird, eine Warnung ausgegeben wird.

9. Vorrichtung, welche zur Durchführung des Verfahrens nach einem der Ansprüche 1, 2, 3, 4, 5, 6oder 7 eingerichtet ist, **dadurch gekennzeichnet,**
**dass** Mittel, die mit dem Fahrzeug verbunden sind, zur Bestimmung der Fahrgeschwindigkeit (v), des Bremsdrucks (p), der Außentemperatur (T_{U}) und zur Zeitaufzeichnung sowie eine Recheneinheit (7), eine mit der Recheneinheit (7) verbundene Regeleinheit (8) und Datenübertragungseinheiten, die ebenfalls mit dem Fahrzeug verbunden sind und für die Beeinflussung des kinematischen Verhaltens des Fahrzeugs vorgesehen sind, und
**dass** die Mittel zur Bestimmung der Fahrgeschwindigkeit (v), des Bremsdrucks (p), der Außentemperatur (Tu) und zur Zeitaufzeichnung mit der Recheneinheit (7) verbunden sind.

10. Vorrichtung nach Anspruch 9, welche zur Durchführung des Verfahrens nach Anspruch 8 eingerichtet ist, **dadurch gekennzeichnet,**
**dass** Mittel, die mit dem Fahrzeug verbunden sind, zur Darstellung der Berechnungsergebnisse vorgesehen sind, und dass diese Mittel mit der Recheneinheit (7) verbunden sind.

## Claims

1. Method for influencing a kinematic behaviour of a vehicle, in particular a rail vehicle having at least one friction brake system, wherein a braking effect is generated by pressing at least a first friction element and a second friction element against each other, **characterised in that** at least temperatures (Tₛ) at least of the first friction element (1) are calculated at least from information relating to a speed, a brake pressure (p) and an external temperature (T_{U}) of the vehicle and to absolute times (t), **in that** a heat conduction through the at least first friction element (1) and a speed-dependent cooling of the at least first friction element (1) are taken into consideration during this calculation, **in that**
the kinematic behaviour of the vehicle is influenced on the basis of this calculation and **in that**
the kinematic behaviour of the vehicle is influenced in respect of a calculated permitted driving profile of the vehicle.

2. Method according to claim 1, **characterised in that** a heat conduction through the second friction element (2) and a speed-dependent cooling of the second friction element (2) are taken into consideration when performing the calculation.

3. Method according to claim 1 or 2, **characterised in that** temperatures (Tₛ) at least of the first friction element (1) are predicted for future braking operations of the vehicle.

4. Method according to one of claims 1, 2 or 3, **characterised in that** following a parking time of the vehicle, at least temperatures (T_{S}) exhibited by at least the first friction element (1) during this parking time are calculated.

5. Method according to one of claims 1, 2, 3 or 4, **characterised in that** the kinematic behaviour of the vehicle is influenced in respect of a calculated permitted driving speed (V_{max, therm}) of the vehicle.

6. Method according to one of claims 1, 2, 3, 4 or 5, **characterised in that** the kinematic behaviour of the vehicle in influenced in respect of a calculated permitted deceleration of the vehicle.

7. Method according to one of claims 1, 2, 3, 4, 5 or 6, **characterised in that** the kinematic behaviour of the vehicle is influenced automatically.

8. Method according to one of claims 1, 2, 3, 4, 5, 6 or 7 **characterised in that** calculation results are presented to operators of the vehicle at least in such a way that a warning is output before any braking operation for which it is predicted that a critical temperature (T_{S, krit}) will be reached in respect of the thermomechanical load at least of the first friction element (1).

9. Apparatus which is configured to perform the method according to one of claims 1, 2, 3, 4, 5, 6 or 7, **characterised in that**
means which are connected to the vehicle are provided for the purpose of determining the driving speed (v), the brake pressure (p), the external temperature (T_{U}) and time recording, and a computing unit (7), a control unit (8) which is connected to the computing unit (7), and data transfer units, these being likewise connected to the vehicle, are provided for the purpose of influencing the kinematic behaviour of the vehicle, and **in that**
the means for determining the driving speed (v), the brake pressure (p), the external temperature (T_{U}) and time recording are connected to the computing unit (7).

10. Apparatus according to claim 9, which is configured to perform the method according to claim 8, **characterised in that** means which are connected to the vehicle are provided for the purpose of presenting the calculation results, and **in that** these means are connected to the computing unit (7).

## Revendications

1. Procédé pour influer sur un comportement cinématique d'un véhicule, notamment d'un véhicule ferroviaire comportant au moins un système de freinage à friction, dans lequel un effet de freinage est généré en serrant au moins un premier élément de friction contre un deuxième élément de friction, **caractérisé en ce qu'**
au moins des températures (Tₛ) au moins du premier élément de friction (1) sont calculées au moins sur la base de données portant sur une vitesse, une pression de freinage (p) et une température extérieure (T_{U}) du véhicule ainsi que sur des temps absolus (t), **en ce qu'**une conduction thermique à travers au moins le premier élément de friction (1) ainsi qu'un refroidissement fonction de la vitesse du premier élément de friction (1) au moins sont pris en compte dans ledit calcul, **en ce qu'**on influe sur le comportement cinématique du véhicule sur la base dudit calcul, et **en ce qu'**on influe sur le comportement cinématique du véhicule par rapport à un profil de déplacement calculé et admissible du véhicule.

2. Procédé selon la revendication 1, **caractérisé en ce que** le calcul est effectué en tenant compte d'une conduction thermique à travers le deuxième élément de friction (2) ainsi que d'un refroidissement fonction de la vitesse du deuxième élément de friction (2).

3. Procédé selon la revendication 1 ou 2, **caractérisé en ce que** des températures (Tₛ) du premier élément de friction (1) au moins sont anticipées pour des freinages à effectuer par le véhicule à l'avenir.

4. Procédé selon l'une des revendications 1, 2 ou 3, **caractérisé en ce qu**'au bout d'un délai d'arrêt du véhicule, au moins des températures (Ts) qu'au moins le premier élément de friction (1) a accusées pendant ce délai d'arrêt sont calculées.

5. Procédé selon l'une des revendications 1, 2, 3 ou 4, **caractérisé en ce que** l'on influe sur le comportement cinématique du véhicule par rapport à une vitesse de déplacement (V_{max, therm}) calculée et admissible du véhicule.

6. Procédé selon l'une des revendications 1, 2, 3, 4 ou 5, **caractérisé en ce que** l'on influe sur le comportement cinématique du véhicule par rapport à un retardement calculé et admissible du véhicule.

7. Procédé selon l'une des revendications 1, 2, 3, 4, 5 ou 6, **caractérisé en ce que** l'influence sur le comportement cinématique du véhicule se fait de manière automatique.

8. Procédé selon l'une des revendications 1, 2, 3, 4, 5, 6 ou 7, **caractérisé en ce que** des résultats des calculs sont présentés aux opérateurs du véhicule au moins d'une manière qu'une alarme soit émise avant un freinage pour lequel l'atteinte d'une température critique (T_{S, krit}) est anticipée quant à la contrainte thermomécanique du premier élément de friction (1) au moins.

9. Dispositif conçu pour mettre en œuvre le procédé selon l'une des revendications 1, 2, 3, 4, 5, 6 ou 7, **caractérisé en ce que**
des moyens reliés au véhicule pour déterminer la vitesse de déplacement (v), la pression de freinage (p), la température extérieure (T_{U}) et pour l'enregistrement temporel ainsi qu'une unité de calcul (7), une unité de réglage (8) reliée à l'unité de calcul (7) et des unités de transmission de données également reliées au véhicule et prévues pour influer sur le comportement cinématique du véhicule, et
**en ce que** les moyens de détermination de la vitesse de déplacement (v), de la pression de freinage (p), de la température extérieure (T_{U}) et d'enregistrement temporel sont reliés à l'unité de calcul (7).

10. Dispositif selon la revendication 9 apte à mettre en œuvre le procédé selon la revendication 8, **caractérisé en ce que**
des moyens reliés au véhicule sont prévus pour la présentation des résultats des calculs et **en ce que** lesdits moyens sont reliés à l'unité de calcul (7).
